Europäisches Patentamt

(19) European Patent Office

Office européen des brevets

(11) Publication number : **0 494 793 B1**

# (12) EUROPEAN PATENT SPECIFICATION

(45) Date of publication of patent specification :
**25.10.95 Bulletin 95/43**

(51) Int. Cl.⁶ : **G11B 5/704**

(21) Application number : **92300229.9**

(22) Date of filing : **10.01.92**

(54) **Magnetic recording medium with improved backside coating.**

(30) Priority : **11.01.91 JP 2130/91**

(43) Date of publication of application :
**15.07.92 Bulletin 92/29**

(45) Publication of the grant of the patent :
**25.10.95 Bulletin 95/43**

(84) Designated Contracting States :
**DE GB NL**

(56) References cited :
**EP-A- 0 203 604**
**EP-A- 0 312 074**
**EP-A- 0 322 826**
**US-A- 4 582 757**
**US-A- 4 745 017**

(73) Proprietor : **MINNESOTA MINING AND MANUFACTURING COMPANY**
**3M Center,**
**P.O. Box 33427**
**St. Paul, Minnesota 55133-3427 (US)**

(72) Inventor : **Abe, Shinichi**
**c/o Sumitomo 3M Limited,**
**33-1, Tamagawadai 2-Chome**
**Setagaya-ku 158, Tokyo (JP)**
Inventor : **Mitsui, Akitaka**
**c/o Sumitomo 3M Limited,**
**33-1, Tamagawadai 2-Chome**
**Setagaya-ku 158, Tokyo (JP)**
Inventor : **Mizutani, Hirokazu**
**c/o Sumitomo 3M Limited,**
**33-1, Tamagawadai 2-Chome**
**Setagaya-ku 158, Tokyo (JP)**
Inventor : **Ohkubo, Takatoshi**
**c/o Sumitomo 3M Limited,**
**33-1, Tamagawadai 2-Chome**
**Setagaya-ku 158, Tokyo (JP)**

(74) Representative : **Baillie, Iain Cameron et al**
**c/o Ladas & Parry**
**Altheimer Eck 2**
**D-80331 München (DE)**

## Description

### FIELD OF THE INVENTION

The present invention relates to magnetic recording media, such as video tapes, audio tapes, computer tapes, and the like, comprising improved backside coatings. More particularly, the present invention relates to magnetic recording media comprising improved backside coating layers, wherein the backside coating layers have excellent tracking, friction, and smoothness characteristics.

### BACKGROUND OF THE INVENTION

Magnetic recording tapes generally comprise a magnetic layer obtained from a magnetic layer coating, metallic vapor deposition or the like provided on one surface of a non-magnetic substrate such as polyester films. Magnetic recording tapes may also comprise a backside coating layers comprising carbon black particles dispersed and bound in a binder provided on the other surface of the substrate. These backside coating layers are used to improve the conductivity, durability, lubricity, and tracking characteristics of a magnetic recording tape.

Whereas the surface of a magnetic layer is typically smoothly finished in order to improve output sensitivity (particularly in a high frequency region), a backside coating layer typically has a relatively rough surface. If the surface of the backside coating layer is too smooth, air tends to become trapped under the tape as it moves. When this happens, tracking is difficult to control, because the entrapped air causes the tension of the media to vary considerably. Tape slippage usually results. Additionally, a smooth backside coating layer has a friction coefficient that is too high, resulting in a tape with poor durability.

On the other hand, if the surface of the backside coating layer is too rough, the backside coating layer tends to damage the smooth surface of the magnetic layer as the magnetic recording tape is wound and unwound. As a result, those electromagnetic properties of the tape which depend upon the smoothness of the magnetic layer, e.g., the signal to noise ratio, sensitivity, maximum output level, and the like, tend to deteriorate.

Accordingly, backside coating layers that are characterized by good tracking and friction characteristics, yet are smooth enough not to damage the magnetic layer, have been desired. Previous investigators have studied this problem. For example, Japanese Patent Kokai No. 60-38725 discloses magnetic recording media having backside coating layers comprising at least two kinds of carbon black particles, whose average particle sizes are 10-30 m$\mu$ and 150-500 m$\mu$.

Japanese Patent Kokai No. 63-300424 discloses magnetic recording media having backside coating layers comprising furnace blacks having an average particle size of 10-30 m$\mu$ and thermal blacks having an average particle size of larger than 70 m$\mu$.

In Japanese Kokai Nos. 60-38725 and 63-300424, the carbonaceous particles different in particle size are merely mixed. Neither publication prescribes average roughness, height of surface projections, or surface density of projections for the backside coating layer. Our investigations have shown that it is necessary to control these features in order to obtain a backside coating that is characterized by good tracking and friction characteristics, yet is smooth enough not to damage the magnetic layer.

Japanese Patent Kokai No. 60-229226 discloses magnetic recording media having backside coating layers comprised of finely particulated fillers and rough particle fillers, wherein the rough particle fillers provide island-like formations in the finely particulated fillers. However, such island formations are difficult to produce so as to sufficiently satisfy all requirements for tracking, friction, and smoothness.

### SUMMARY OF THE INVENTION

The present invention provides improved magnetic recording media comprising novel backside coating layers having excellent tracking, friction, and smoothness characteristics. The present invention is based on the discovery that such tracking, friction, and smoothness characteristics may be achieved by incorporating two kinds of carbon black particles in a backside coating layer, wherein each kind of carbon black particle has a particle size within a certain specified range and wherein the weight proportions of each kind of carbon black particle is within a certain specified range. Use of the two kinds of carbon black particles introduces a plurality of projections into an otherwise smooth surface. Advantageously, the projections have a size and surface density such that the surface of the backside coating layer has a rough texture for minimizing air entrapment during tape transport, yet is smooth enough such that the backside coating layer has less of a tendency to damage the magnetic layer relative to previously known backside coating layers comprising two different kinds of carbon black particles.

The advantages of the present invention are achieved by magnetic recording media comprising a nonmagnetic substrate having two major surfaces, a magnetic layer provided on one major surface of the nonmagnetic substrate, and a backside coating layer provided on the other major surface of the nonmagnetic substrate. The backside coating layer comprises carbon black particles dispersed in a binder. The backside coating layer has a centerline average roughness of 30 nm or less. The surface density of projections of the backside coating layer having a height of 30 nm or more is 2% or more, and the surface density of projections of the backside coating layer having a height of 100 nm or more is 2% or less.

## DESCRIPTION OF THE PREFERRED EMBODIMENTS

The backside coating layers of the present invention have the following characteristics:
(1) the backside coating layer has a centerline average roughness of 30 nm or less,
(2) the surface density of projections of the backside coating layer having a height of 30 nm or more is 2% or more, and
(3) the surface density of projections of the backside coating layer having a height of 100 nm or more is 2% or less.

The first characteristic (1) provides a backside coating layer with a smooth surface, thus minimizing the tendency of the backside coating layer to damage the magnetic layer. Because of the second characteristic (2), only the projections having a height of 30 nm or more contact the magnetic layer for the most part. As a result, the real contact between the backside coating layer and the magnetic layer is minimized, thus providing a backside coating with a low friction coefficient. Such projections, however, tend to gradually wear down upon repeated running of the magnetic tape. Satisfaction of the third characteristic (3) reduces such wear.

In this invention, in order to provide backside coating layers having a centerline average roughnesses of 30 nm or less, it is preferred to use a relatively large amount of finely divided carbon black particles having a particle size in the range from 10 to 30 nm. And, in order to provide backside coating layers having a surface density of 2% or more of projections having a height of 30 nm or more, it is preferred to use relatively small amounts of larger carbon black particles having a particle size in the range from 150 to 1000 nm. Further, in order to provide backside coating layers having a surface density of 2% or less of projections having a particle size of 100 nm or more, it is preferred that the weight ratio of the finely divided carbon black particles to the larger carbon black particles is in the range from 99.9/0.1 to 70/30.

As a binder to be used in the backside coating layers of the present invention, various binders or a combination of binders conventionally known in the art such as thermoplastic resins, thermosetting resins or mixtures of those can be used. Preferred resins include, for example, polyurethane-type resins, cellulose-type resins, butylal-type resins, polyester-type resins, vinyl chloride-vinyl acetate-type resins, acetal-type resins, and mixtures of those resins. The binder may also include a polyisocyanate compound added as a crosslinking agent.

Blending ratios of the carbon blacks to the binders preferably range from 30/70 to 70/30 by weight. If too little of the carbon black particles is used, the friction coefficient of the backside coating layer may be too high. If too much of the carbon black particles is used, the durability of the backside coating layer will be reduced.

In addition to the carbon black particles and the binder, backside coating layers of the present invention may also optionally comprise one or more conventional additives. For example, the backside coating layer may comprise a lubricant such as a fatty acid and fatty acid ester, a surfactant, and the like, depending on the needs. Such additives may also include powdery inorganic materials which may be added into the backside coating layers of this invention for the purpose of improving durability. Preferred powdery inorganic materials include $CaCO_3$, $TiO_2$, $ZnO$, $Cr_2O_3$, $\alpha$-$Al_2O_3$, etc.

Backside coating layers of the present invention may be prepared by milling the carbon black particles, the binder, and any additives in an organic solvent to form a dispersion. The resulting dispersion may then be coated onto the backside of a nonmagnetic substrate, after which the coated dispersion is dried to form the backside coating layer.

The thickness of the backside coating layer depends upon the kind of magnetic recording medium. However, the durability and the surface smoothness are reduced if the backside coating layer is too thin, and too thick a layer loses not only contactability but also is counter to the recent tendency to make magnetic tape as thin as possible. Generally, backside coating layers having a dried thickness in the range from 0.5 to 1.5 μm has been found to be suitable in the practice of the present invention.

The present invention will now be further described with reference to the following examples. In the following examples, the term "parts" means parts by weight.

## Application Example 1

A magnetic layer comprising Co-containing maghematite was coated onto one surface of a polyethylene terephthalate ("PET") film. And a backside coating layer having a dried thickness of 0.66 μm was applied on the other surface of the film. The composition of coating materials for the backside coating layer was as follows:

### Table 1

| Component | Composition | | |
|---|---|---|---|
| | No. 1 | No. 2 | No. 3 |
| Carbon black A (diameter 0.02 μm) | 99 | -- | -- |
| Carbon black B (diameter 0.35 μm) | -- | 1 | -- |
| Nitrocellulose | 51 | -- | -- |
| Polyurethane | -- | 22 | -- |
| Dispersant (lecithin) | 3 | -- | -- |
| Methyl ethyl ketone | 408 | -- | -- |
| Toluene | 204 | 271 | -- |
| Cyclohexane | 68 | 90 | -- |
| Polyisocyanate | -- | -- | 20 |

To prepare the coating material, the components of composition No. 1 were mixed and stirred for about one hour, then dispersed by a sand-mill. Likewise, the components of composition No. 2 were sufficiently dispersed, then both components were mixed, and finally the components of composition No. 3 were added into the mixture to prepare the backside coating formulation. The mixture for this formulation was applied onto one surface of the PET film and the magnetic layer was coated on the other surface of the PET film. After both layers dried, the obtained film was calendered and then slitted into strips having a width of 0.5 inch (12,7 mm) to be sample pieces.

## Application Example 2

Samples were obtained in the same way as that of Application Example 1, except that the thickness of the backside coating layer was 0.70 μm.

## Comparative Example 1

Samples were obtained in the same way as that of Application Example 1, except that the thickness of the backside coating layer was 0.80 μm.

## Application Example 3

Samples were obtained in the same way as that of Application Example 1, except that the amount of carbon black A used was 98 parts, the amount of carbon black B used was 2 parts, and the thickness of the backside coating layer was 0.68 μm.

## Application Example 4

Samples were obtained in the same way as that of Application Example 1, except that the amount of carbon black A used was 95 parts, the amount of carbon black B used was 5 parts, and the thickness of the backside coating layer was 0.70 μm.

### Comparative Example 2

Samples were obtained in the same way as that of Application Example 1, except that the amount of carbon black A used was 80 parts, the amount of carbon black B used was 20 parts, and the thickness of backside coating layer was 0.75 µm.

### Comparative Example 3

Samples were obtained in the same way as that of Application Example 1, except that the amount of carbon black A used was 30 parts, the amount of carbon black B used was replaced with 70 parts of titanium oxide having an average particle size of 70 µm, and the thickness of backside coating layer was applied at 0.68 µm.

### Application Example 5

Samples were obtained in the same way as that of Application Example 1, except that the amount of carbon black A used was 99.6 parts, the amount of carbon black B used was 0.4 parts, and the thickness of the backside coating layer was 0.62 µm.

The properties of the magnetic tape samples obtained in the above Application Examples 1-5 and Comparative Examples 1-3 were evaluated, and the results are shown in Table 2.

Measurement methods and evaluation methods were as follows:

### Evaluation Method:

1) Height of projection

A roughness of a surface was measured using a 3D interferometer available from WYKO Co. A centerline average roughness (Ra) was calculated from the values of peak to valley.

2) Surface density of projections

First, from the number and height of projections, a cumulative curve was made up. Then, it was standardized so that Gaussian distribution was in a straight line. The number of projections which were higher than the certain heights was then calculated and converted to the ratio in area.

3) Friction coefficient

The tapes were wound around the guide pin used in an HGS cassette half so as to make a 120 degree angle. The drawing tension was adjusted to 50 g. The tapes were run forward and backward 200 times under the condition of 26°C, 80% RH. The drawn side tension of 200th cycle was measured. A friction coefficient was calculated from the following expression:

$$( 3 / 2 \pi ) \times \ln ( T / 50 ) .$$

The value of this expression was given as a parameter of the durability.

4) Drop-out

VHS video tape recorder (NV-8200. Matsushita Electrics Industrial Co., Ltd.) was used. Instant drops of a picture signal (size 10 µs-15dB) were measured with a drop-out counter and shown as a number per minutes.

5) Noise

First, a signal of 7 MHz was recorded, when played back, a signal level of 6.9 MHz was measured as a noise. Generally, a larger value indicates a rougher magnetic layer.

5

Table 2

| | | Application Example | | | | | Comparative Example | | |
|---|---|---|---|---|---|---|---|---|---|
| | | 1 | 2 | 3 | 4 | 5 | 1 | 2 | 3 |
| Carbon black (average particle size, 20 nm) | (wt%) | 99 | 99 | 98 | 95 | 99.6 | 99 | 80 | 30 |
| Carbon black (average particle size, 350 nm) | (wt%) | 1 | 1 | 2 | 5 | 0.4 | 1 | 20 | 0 |
| Titanium Oxide (average particle size, 70 nm) | (wt%) | 0 | 0 | 0 | 0 | 0 | 0 | 0 | 70 |
| Thickness of backside coating layer | ($\mu$m) | 0.66 | 0.70 | 0.68 | 0.70 | 0.62 | 0.80 | 0.75 | 0.68 |
| Centerline average roughness of backside coating layer | (nm) | 17 | 16 | 14 | 18 | 10 | 14 | 31 | 39 |
| Surface density of projections in backside coating layer | 30 nm or more (%) | 8.3 | 3.5 | 6.0 | 9.0 | 2.1 | 1.6 | 18.0 | 27.4 |
| | 100 nm or more (%) | 0.3 | 0.2 | 0.4 | 0.9 | 0.1 | 0.1 | 3.3 | 1.5 |
| Gravity friction coefficient of backside coating layer after 200 passes | | 0.16 | 0.24 | 0.18 | 0.18 | 0.17 | 0.40 | 0.17 | 0.24 |
| Drop-out | (number) | 11 | 10 | 15 | 13 | 10 | 11 | 40 | 13 |
| Noise | (dB) | 0 | 0 | 0 | 0.5 | 0 | 0 | 2.0 | 3.5 |

EP 0 494 793 B1

Other embodiments of this invention will be apparent to those skilled in the art from a consideration of this specification or from practice of the invention disclosed herein. Various omissions, modifications, and changes to the principles described herein may be made by one skilled in the art without departing from the scope of the invention which is indicated by the following claims.

## Claims

1. A magnetic recording medium, comprising a nonmagnetic substrate having two major surfaces, a magnetic layer provided on one major surface of the nonmagnetic substrate, and a backside coating provided on the other major surface of the nonmagnetic substrate, wherein:
   the backside coating comprises carbon black particles dispersed in a binder,
   the backside coating has a centerline average roughness of 30 nm or less,
   the surface density of projections of the backside coating having a height of 30 nm or more is 2% or more, and
   the surface density of projections of the backside coating having a height of 100 nm or more is 2% or less.

2. The magnetic recording medium of claim 1, wherein the carbon black particles comprise 70 to 99.9 percent by weight of carbon black particles having a particle size in the range from 10 to 30 nm and 0.1 to 30 percent by weight of carbon black particles having a particles size in the range from 150 to 1000 nm.

3. The magnetic recording medium of claim 1, wherein the weight ratio of the carbon black particles to the binder is in the range from 30:70 to 70:30.

## Patentansprüche

1. Magnetischer Aufzeichnungsträger mit einem unmagnetischen Substrat mit zwei Hauptoberflächen, wobei auf einer Hauptoberfläche des unmagnetischen Substrats eine Magnetschicht vorgesehen ist, und wobei auf der anderen Hauptoberfläche des unmagnetischen Substrats eine Rückschicht vorgesehen ist, wobei:
   die Rückschicht in einem Bindemittel dispergierte Rußpartikel umfaßt;
   die Rückschicht einen arithmetischen Mittenrauhwert von 30 nm oder weniger aufweist;
   die Oberflächendichte von Vorsprüngen der Rückschicht mit einer Höhe von 30 nm oder mehr 2% oder mehr beträgt; und wobei
   die Oberflächendichte von Vorsprüngen der Rückschicht mit einer Höhe von 100 nm oder mehr 2% oder weniger beträgt.

2. Magnetischer Aufzeichnungsträger nach Anspruch 1, wobei die Rußpartikel 70 bis 99,9 Gewichtsprozent der Rußpartikel mit einer Partikelgröße von 10 bis 30 nm und 0,1 bis 30 Gewichtsprozent der Rußpartikel mit einer Partikelgröße von 150 bis 1000 nm umfassen.

3. Magnetischer Aufzeichnungsträger nach Anspruch 1, wobei das Gewichtsverhältnis der Rußpartikel zu dem Bindemittel im Bereich von 30:70 bis 70:30 liegt.

## Revendications

1. Milieu d'enregistrement magnétique, comprenant un substrat non-magnétique ayant deux grandes surfaces, une couche magnétique prévue sur une grande surface du substrat non-magnétique, et un revêtement dorsal prévu sur l'autre grande surface du substrat non-magnétique, dans lequel :
   le revêtement dorsal comprend des particules de noir de carbone dispersées dans un liant,
   le revêtement dorsal a une rugosité moyenne centrale de 30 nm ou moins,
   la densité superficielle des saillies du revêtement dorsal ayant une hauteur de 30 nm ou moins est de 2 % ou plus, et
   la densité superficielle des saillies du revêtement dorsal ayant une hauteur de 100 nm ou plus est de 2 % ou plus.

2. Milieu d'enregistrement magnétique selon la revendication 1, dans lequel les particules de noir de carbone comprennent 70 à 99,9 % en poids de particules de noir de carbone ayant une granulométrie comprise entre 10 et 30 nm et 0,1 à 30 % en poids de particules de noir de carbone ayant une granulométrie comprise entre 150 et 1000 nm.

3. Milieu d'enregistrement magnétique selon la revendication 1, dans lequel le rapport en poids des particules de noir de carbone au liant est compris entre 30:70 et 70:30.